Europäisches Patentamt

European Patent Office

Office européen des brevets

(11) Publication number: **0 422 315 A1**

# EUROPEAN PATENT APPLICATION

(21) Application number: 89850345.3

(22) Date of filing: 11.10.89

(51) Int. Cl.5: **C08L 95/00**, //(C08L95/00, 101:00,91:00)

(43) Date of publication of application:
**17.04.91 Bulletin 91/16**

(84) Designated Contracting States:
**AT BE CH DE ES FR GB GR IT LI LU NL SE**

(71) Applicant: **NYNÄS N.V.**
**4e Havendok Kaaien 279/285**
**B-2030 Antwerpen(BE)**

(72) Inventor: **Gastmans, André Constant Clement**
**St.-Reinhildisstraat 14**
**B-2510 Mortsel(BE)**

(74) Representative: **Fogelberg, Lennart et al**
**STENHAGEN PATENTBYRA AB Box 17 709**
**S-118 93 Stockholm(SE)**

(54) Process for making asphalt mixtures.

(57) A process for making asphalt mixtures containing mineral aggregates, at least one polymer and bitumen is disclosed, which process comprises mixing mineral aggregates in arbitrary order with
A) a preblend of heavy to very heavy oil and said at least one polymer and
B) said bitumen.

EP 0 422 315 A1

# PROCESS FOR MAKING ASPHALT MIXTURES

The present invention relates to a process for making asphalt mixtures containing mineral aggregates, at least one polymer and bitumen.

Since the late 1960's polymers are mixed into bitumen (the term "bitumen" as used herein and in the claims has the meaning applied in Europe and is synonym to the term "asphalt" used in the U.S.) to ameliorate the rheological properties of the bitumen. Using different polymers such as styrene-butadien-styrene copolymers (SBS), ethylene vinyl acetate copolymers (EVA), ethylene-propylene-diene copolymers (EPDM) and others, the breaking point fraass is lowered and the softening point ring-and-ball is increased.

This means that the difference between the fraass breaking point and the softening point is increased dramatically. This also means that the susceptibility of the viscosity to variations in temperature is lowered. All this means that incorporation of polymers in a bitumen improves the rheological and mechanical properties of the polymer-bitumen (PmB) mix.

The classical way of making asphalt mixtures comprising mineral aggregates, at least one polymer and bitumen is to make first a mixture of bitumen and polymer(s), which mixture is then given in an asphalt mixing unit onto an aggregate mixture of stones, sands and fillers (of. for instance, EP-B1-0 001 440).

A normal procedure to make PmB mixes is to incorporate the polymer(s) into the bitumen by stirring at elevated temperatures (vide, e.g., EP-B1-0 001 440 mentioned above). When the used bitumen and the used polymer(s) are not fully compatible a separation will occur when storing the PmB blend. The polymers tend to cream-up partly and at the same time the asphaltenes of the bitumen tend to precipitate. Comparing the softening point ring-and-ball from the top and the bottom of the recipient in which hot-storage is done, a considerable difference is observed.

In order to overcome this storage difficulty several solutions have been suggested. Thus EP-A3-0 146 163 suggests mixing the mix of bitumen (the US term "asphalt" being used in this reference) and polymers into aggregates.

EP-A1-0 205 774 teaches the use of a second styrene butadiene rubber.

According to EP-A3-0 174 795 0.01 to 0.6 % of sulphur should be used as an additive.

EP-A1-0 175 608 discloses the use of gamma radiation or chemical coupling with peroxides and hydroperoxides under the action of oxygen.

EP-A1-0 096 638 teaches the use of polysulphides.

Sometimes a mother mix of bitumen with a high content of polymer is made. This mother mix is blended back with bitumen just before use to a desirable amount of polymer in the final mix (EP-A1-0 096 638).

It is a fact that it is not evident and easy to make compatible mixes with long storage stability which means no separation in the mix.

To have full use of the polymer in the PmB mix, the polymer must be finely dispensed into the mix. This involves sometimes the use of long mixing times, high shear mixers and high temperatures. Sometimes it is not possible with all combinations of kinds of polymers, kinds of bitumen, amounts of polymers and amounts of bitumen, to make these fine dispersions, even by using long mixing times, high shear apparatus or high temperatures. Sometimes the fine dispersion is only reached after partial depolymerisation and chemical transformation of the polymer.

The final PmB mix has a well defined polymer concentration. However, in practice, it is not so evident that all asphalt mixes need the same polymer concentration in the mix. It is very possible that a contractor has several works at the same time with different asphalt compositions. The use of a ready mixed PmB will cause problems in such cases. The contractor needs different vessels to store ready mix blends containing different amounts of polymers in it.

Once the ready PmB is in the vessel this vessel becomes immobilised for other binders. The contractor also has to buy the exact quantity of ready PmB. This ready PmB, being expensive, will not be used in normal asphalt mixes, because of the economical disadvantage in that case.

It is an object of the present invention to provide a process for making asphalt mixtures which process obviates the above mentioned difficulties related to the storage stability and enables one and the same base mixture to be used for different final polymer contents.

This and other objects are achieved according to the present invention by means of a process for making asphalt mixtures containing mineral aggregates, at least one polymer and bitumen, which process comprises mixing mineral aggregates in arbitrary order with

A. a preblend of heavy to very heavy oil and said at least one polymer and
B. said bitumen.

While producing a straight run bitumen, the properties of the residual product in the vacuum tower depend on the distilling conditions in that vacuum tower: temperature, remaining pressure, amount of overheated steam in the bottom of the tower and the throughput.

As an example, the differences between a straight run bitumen with a penetration at 25 C/5"/100 gr of 60 and one with a penetration of 40, is the small amount of very heavy oil between the true boiling point of a 60 penetration and that of a 40 penetration. Let this be the oil amount : A.

Taking afterwards the 40 penetration and giving back the amount A of the very heavy oil, the penetration of the obtained mix will be 60.

Giving more of this oil (a quantity A + x%) the penetration of the end product will be higher and the softening point lower.

If a certain amount of a polymer (say 5 %) is blended now in the amount A of the very heavy oil and given onto a bitumen with 40 penetration, the end product will have the same properties as the blend of 60 penetration with 5 % of the polymer, because the 40 penetration + A % of the very heavy oil gives 60 penetration.

The great advantage of the preblend-mix between polymer and (very) heavy oil used in the process according to the present invention is the absolute stability of this blend. The shelve life is so to say indefinite. This blend can be stored at 165° C for very long times without any separation.

Another advantage is the very short mixing time (15 minutes to 30 minutes) between polymer and (very) heavy oil to make the preblend. Common low-shear-mixers are sufficient to make the preblend.

To mix a polymer into a bitumen, following the classical way of doing, the mixing time will be much longer. A normal mixing time, even with high shear mixers, is between 2 and 10 hours.

Moreover, in the process according to the present invention, the bitumen used can be a 40 penetration bitumen. This means an advantage in view of the fact that a 40 penetration bitumen is a regular quality in the plant. This, in turn, means the further advantage that the contractor can use his ordinary tank of base bitumen.

Using the same preblend and the same base bitumen, it is possible to obtain, with different preblend quantities, almost the same end penetration of the final blend with different softening points. These softening points correspond with different end quantities of polymer in the final asphalt mix (see Example 8 below).

The process according to the invention may be carried out batchwise or continuously utilizing equipment well-known from conventional processes for making asphalt mixtures containing mineral aggregates, at least one polymer and bitumen.

According to one embodiment of carrying out the process according to the present invention in batchwise operation the mineral aggregates are first mixed with the preblend of heavy to very heavy oil and polymer(s), preferably until the preblend is at least substantially uniformly distributed in the mixture, whereafter the bitumen is added and mixing is continued until a uniform distribution of the bitumen in the mixture is obtained.

According to another embodiment of carrying out the process according to the present invention in batchwise operation the mineral aggregates are first mixed with the bitumen, preferably until the bitumen is at least substantially uniformly distributed in the mixture, whereafter the preblend is added and mixing is continued until a uniform distribution of the preblend in the mixture is obtained.

According to a third embodiment carrying out the present invention in batchwise operation the preblend and the bitumen are added contemporaneously to the mineral aggregates during mixing and mixing is continued until a uniform distribution of the preblend and the bitumen in the mixture is obtained.

When carrying out the process according to the invention continously the materials subjected to mixing are continuously. passed through a mixing apparatus under mixing, the preblend and the bitumen being fed to the mineral aggregates. preferably at different stages during the passage of said aggregates through the mixing apparatus. The preblend and the bitumen can be fed in arbitrary order to the mineral aggregates but preferably the preblend is added first and the bitumen is added at a stage where an at least fairly uniform distribution of the preblend in the mixture thereof with the mineral aggregates has been obtained.

The best mode contemplated at present for carrying out the invention is a batchwise operation wherein the preblend is added to the mineral aggregates in a mixing apparatus under mixing and after reaching an at least substantially uniform distribution of the preblend in the mixture the bitumen is added and mixing continued until a uniform distribution of the bitumen in the mixture is obtained.

Mineral aggregates to be used in the process of the present invention may be those conventionally utilized in asphalt mixes and comprising stone and sand materials.

Examples of stone materials in such mineral aggregates are gravel stone, porphyry, granite, diabase, limestone and many others.

3

Examples of sand materials in such mineral aggregates are the crushed sands of the above mentioned stones and also natural sands.

Polymers to be used in the process according to the invention are, for instance, all types of polymers normally used in asphalt industry, provided that they are compatible with the heavy to very heavy oils, e.g. SBS, EVA and EPDM.

According to another aspect of the present invention filler and/or fibers can be added separately from operations A and B.

All conventionally in asphalt mixes utilized fillers and fibers are contemplated for use according to this embodiment of the invention, e.g. fillers such as fine material of the above mentioned stones, fly ash, cement, lime, dusts, fines from chemical processes and others and fibers such as cellulose fibers, rock fibers, asbestos and others.

In the present invention a series of oils can be utilized to make the preblend. The term "heavy to very heavy oil" is used here and in the claims to designate oily substances of a considerable viscosity. In general the viscosity (as measured with Höppler viscosimeter at 40° C) should be at least 50 mm²/s, preferably at least 200 mm²/s, especially at least 400 mm²/s. Oils having a viscosity measured as indicated above of 1000 to 2000 mm²/s or above are considered to be "very heavy oils". Generally the viscosity is lower than 9000 mm²/s, preferably lower than 4000 mm²/s.

Examples of products to be used as the heavy to very heavy oil in accordance with the invention are lubricating oils, heavy and very heavy petroleum distillates, extracts, process oils, tar oils, residual oils from cracking operations, soft bitumen and mixtures of such products.

The amount of these oils in the preblend depends on the solubility and miscibility, and the working and storage temperature. In general, the amount of oil is 30 to 99 % by weight of the preblend, particularly 55 to 90 % by weight of the preblend and especially 64 to 85 % by weight of the preblend.

The mixing of the aggregates with the preblend and the bitumen provokes an excellent repartition of the polymers through the complete asphalt mix.

According to a further aspect of the present invention a cross-linking agent is added to the bitumen before operation B mentioned above or to the materials subjected to mixing during operation B.

An advantage of this embodiment is the increase in stability of the asphalt mix during storage.

Another advantage of this embodiment is the surplus in mechanical strength given by this cross-linking of the polymer. However, a disadvantage, when giving a cross-linking agent in the ready mixed polymer bitumen, is the fact that the total amount of polymer has to be kept low ( 3 - 5 % by weight calculated on the weight of bitumen), in order to guarantee a sufficient pumpability. Indeed, when using higher amounts of polymer, a quick gelation takes place with all the negative aspects thereof.

The present invention provides a solution also for this difficulty in that the cross-linking agent can be mixed into the base bitumen (45 penetration or any other bitumen) used in the plant for the mixing process in this invention. In this case the cross-linking agent has to be heat-stable enough for a prolonged contact time with bitumen at elevated temperature (150 - 175° C).

The cross-linking agent is chosen among the substances conventionally used for cross-linking of the respective polymer used in the present invention.

As a bitumen, all types of binders conventionally utilized in classical asphalt mixes can also be used in this invention. Examples of such binders are straight run bitumen, semi blown bitumen, solvent extracted bitumen, cracked residual bitumen, tar and mixtures of at least two such materials.

The following examples are given for illustrative purposed and are not to be construed as limiting the invention disclosed therein.

## EXPERIMENTAL PART

### General experimental details

#### Analyses

Softening point : measured according to ASTM No D 36
Penetration : measured according to ASTM No D 5
Fraass breaking point : measured according to DIN No 52012
Viscosity : measured with Höppler viscosimeter

Marshall compaction : To make a Marshall-tablet, in a 4 inch (102 mm) diameter mold, a sufficient amount of coated asphalt mixture is introduced to give after a compaction a thickness of almost 2 1/2 inch (64 mm). The compaction is done with a falling weight hammer (weight : 4,54 kg; fall height : 45,7 mm) with blows each side of the tablet.

Tensile stress : The tensile stress is measured in a diametrical compression test, done with the Marshall-press. In this press a Marshall-tablet is pressed between two horizontal plates. This placement of the tablet induces a traction in the diametrical plane connecting both contact lines. The tensile stress is calculated as follows:

Tensile Stress :

$$\text{Tensile Stress} : \frac{2}{\pi} \cdot \frac{P}{h.D} \cdot (N/cm^2)$$

P = maximum stress in N
h = thickness of tablet in cm
D = diameter of tablet in cm (= 4 inches)

$$\text{Deformation \%} = \frac{\text{measured deformation}}{\text{original diameter}}$$

Iatroscan-analysis : The iatroscan apparatus (TH 10) manufactered by Iatron Laboratories Inc., Tokyo, Japan, can give a chemical analysis of the bitumen. To separate the saturates, normal heptane is used; to separate the aromates, a mixture of 80 % toluene and 20 % normal heptane is used; to separate the resins, a mixture of 95 % of dichloromethane and 5 % of methanol is used. The asphaltenes remain unsolved.

| Oils used in the experiments | | | |
|---|---|---|---|
| OF 60 : | very heavy oil coming from the distillation of Laguna crude | | |
| | $d_{15}$ | | 0.9817 |
| | Viscosity : | 40° C, mm²·s | 2250 |
| | Flash point : | ° C | 225 |
| | Composition : | asphaltenes % | 12.06 |
| | (iatroscan) | resins % | 15.23 |
| | | aromates % | 54,48 |
| | | saturates % | 16.13 |
| H 450 : | heavy Nynas process oil | | |
| | $d_{15}$ | | 0.938 |
| | Viscosity : | 40° C, mm² s | 430 |
| | Flash point : | ° C | 220 |
| | Composition : | asphaltenes % | 1.05 |
| | (iatroscan) | resins % | 4.42 |
| | | aromates % | 53.07 |
| | | saturates % | 41.01 |
| TF 60 : | very heavy experimental Nynas process oil | | |
| | Viscosity : | 40° C, mm²·s | 1815 |
| | Composition : | asphaltenes % | 2.01 |
| | (iatroscan) | resins % | 50.98 |
| | | aromates % | 42.59 |
| | | saturates % | 2.45 |

Examples part A

Preparation of open grade asphalt

Open grade asphalt is used as a wearing course. The open grade asphalt enables draining of water horizontally. Polymer-bitumen (PmB) binders are extensively used in this kind of compositions.

The basic aggregate composition used in our experiments was the following : ( = standard aggregate mix open grade)

broken gravel 7/10 (sg : 2.637) : 82 % (w/w)
broken gravel sand (sg : 2.681) : 13 % (w/w)
filler type II (fly ash mix sg : 2.489) : 5 % (w/w)

In the following examples the indicated amounts of preblend and bitumen are always expressed as a percentage on 100 parts by weight of aggregate mentioned as "standard aggregate mix".

## EXAMPLE 1

Trial 1

Mixing was carried out in a mixer of the type at a temperature of 175°C.

In a first step the stones and sand contents of the standard aggregate mix open grade (vide above) were mixed with 1.25 % PMHS for 1 min. Then in a second step 3.75 % bitumen 45 penetration was added and mixing continued for 1/2 min. Finally in a third step the filler contents of the standrad aggregate mix open grade were added and mixing continued for 1 min.

Characteristics of the asphalt mix obtained:

Tensile stress at 45°C : 6.95 N/cm$^2$

Deformation : 1.7 %

PMHS consists in :

75 % (w·w) Nynas process oil H 450

25% (w·w) SBS TR 1101 (Shell)

The mixture as mentioned above (1.25 % PMHS and 3.75 % bitumen 45 penetration) contains

$$25 \% \times 1.25 =$$
$$31.25 \text{ on } 5 \text{ parts} = \frac{31.25}{5} = 6.25 \% \text{ TR } 1101$$

The oil + bitumen part is :

$$\frac{75 \times 1.25}{100} = 0.9375 \text{ parts oil} + 3.75 \text{ parts bitumen}$$
$$= 4.6875 \text{ parts}$$

which means

$$\frac{0.9375}{4.6875} = 20 \% \text{ oil H } 450$$
$$\frac{3.75}{4.6875} = 80 \% \text{ bitumen } 45 \text{ penetration}$$

The mixture of 20 % oil H 450 and 80 % bitumen 45 pen has a penetration of 277 at 25°C 100 g 5".

Note:

75% oil H 450 and 25 % SBS TR 1101 has the following viscosities:
at 122°C : 4023 mm²/s
144°C : 1486 mm²/s
175°C : 477 mm²/s

Trial 2 (Comparison)

The general procedure of Trial 1 was repeated using the following parameters:
Standard aggregate mix open grade.
Mixing temperature : 150°C
Mixing :
Step 1: stones + sand + 5 % bitumen 276 penetration : 1 min
Step 2: + filler : 1 min
Tensile stress at 45°C : 4.62 N/cm²
Deformation : 1.7 %
This example shows clearly that the polymer takes a very active part in the mechanical resistance.
Indeed, should the SBS not have been finely dispersed in the bitumen over the total asphalt mix, but rather be present as an unbound material, the final binder in trial 1 would be a soft bitumen with approximately 275 penetration. As shown in Trial 2, the tensile stress would then be low.

EXAMPLE 2

Trial 1

Mixing was carried out as in Exampel 1 using the following parameters:
Standard aggregate mix open grade
Mixing temperature : 175°C
Mixing :
Step 1 : stones + sand + 3.75 % bitumen 45 pen : 1.2 min
Step 2 : + polymer bitumen : 1.25 % Mix PMF : 1 min
[polymer mix PMF = 80 % (w/w) OF 60 + 20 % w/w) SBS Finaprei e 411 (from Fina)]
Step 3 : + filler : further mixing : 1 min.
Tensile stress at 45°C : 8.76 N/cm²
Deformation : 1.7 %.
The penetration of the mix 3.75 parts by weight of bitumen 45 pen + 1.25 parts by weight of PMF is 94.

Trial 2 (Comparison)

Mixing was carried out as in Example 1 using the following parameters:
Mixing temperature : 160°C
Mixing :
Step 1 : stones + sand + 5 % straight run bitumen 95 penetration : 1 min
Step 2 : + filler : further mixing : 1 min
Tensile stress at 45°C : 8.66 N/cm²
Deformation : 1.7 %

Trial 3 (Comparison)

Same composition and working conditions as in trial 2 but using straight run bitumen 190 penetration, instead of 95 penetration.
Tensile stress at 45°C : 6.28 N cm²

Deformation : 1.7 %

This Example shows the active contribution of the polymer in the end properties of the asphalt.

## EXAMPLE 3

### Trial 1

Mixing was carried out as in Example 1 using the following parameters:

Standard aggregate mix open grade

Mixing temperature : 175° C

Mixing :

Step 1 : stones + sand + 3.5 % bitumen 45 penetration : 1/2 min

Step 2 : + polymer bitumen : 1.5 % PMF mix : 1 min

[polymer mix PMF : 80 % (w/w) OF 60 + 20 % (w/w) SBS Finaprene F 411 (from Fina)]

Step 3 : + filler : 1 min

Tensile stress at 45° C : 7.74 N/cm$^2$

Deformation : 1.7 %.

### Trial 2

Mixing was carried out as in Example 1 using the following parameters:

Standard aggregate open grade

Mixing temperature : 175° C

Mixing :

Step 1 : stones + sand + 1.5 % PMF mix : 1 min

Step 2 : + 3.5 % bitumen 45 penetration : 1 min

Step 3 : + filler : 1 min

Tensile stress at 45° C : 7.75 N/cm$^2$

Deformation : 1.7 %.

This Example shows that the end properties of the mixes are the same, independently of the order of mixing: first premix of polymer and (very) heavy oil and then bitumen or first bitumen and then premix of polymer and (very) heavy oil.

## EXAMPLE 4

Mixing was carried out as in Example 1 using the following parameters:

Standard aggregate mix open grade.

Mixing temperature : 175° C

Mixing :

Step 1 : stones + sand + 1.25 % mix PMTSF : 1 min

[polymer mix PMTFS = 75 % (w/w) oil TF 60 + 25% (w/w) SBS TR 1101]

Step 2 : + bitumen 45 penetration : 1 min

Step 3 : + filler : 1 min

Tensile stress at 45° C : 10.58 N/cm$^2$

Deformation : 1.7 %

This Example shows the very high tensile stress at 45° C when the Nynas TF 60 experimental oil is used.

## EXAMPLE 5

### Trial 1

Mixing was carried out as in Example 1 using the following parameters:
Standard aggregate mix open grade.
Mixing temperature : 175°C
Mixing :
Step 1 : stones + sand + 1.25 % polymer-bitumen PMS : 1 min
[polymer mix PMS = 80 % (w/w) oil OF 60 + 20% (w/w) Cariflex TR 1101]
Step 2 : + 3.75 % bitumen 45 penetration : 1 min
Step 3 : + filler : 1 min
Tensile stress at 45°C : 7.56 N/cm$^2$
Deformation : 1.7 %

Note:

80 % (w/w) oil OF 60 + 20 % (w/w) Cariflex TR 1101(Shell) has the following viscosities:
at 129°C : 1074 Cst
at 149°C : 616 Cst
at 175°C : 337 Cst

Trial 2

Mixing was carried out as in Example 1 using the following parameters:
Standard aggregate mix
Mixing temperature : 175°C
Mixing :
Step 1 : stones + sand + 1.25 % PMS : 1 min
Step 2 : + 3.75 % bitumen 45 penetration with 0.3 % cross-linking agent Si 69 Degussa (calculated on 100 % bitumen) : 1 min
Tensile stress at 45°C : 9.15 N/cm$^2$
Deformation : 1.7 %
This Example shows the important increase in tensile stress when in the bitumen phase a cross-linking agent is added.

EXAMPLE 6

Trial 1

Mixing was carried out as in Example 1 using the following parameters:
Standard aggregate mix open grade
Mixing temperature : 175°C
Mixing :
Step 1 : stones + sand + 1.25 % PMHS : 1 min (75 % oil H 450 + 25 % SBS TR 1101) (Shell)
Step 2 : + 3.75 % bitumen 45 penetration : 1 min
Step 3 : + filler : 1 min
Note: The penetration of a mixture between 1.25 parts by weight PMHS and 3.75 parts by weight of bitumen 45 penetration is 98.

Trial 2 (Comparison)

Mixing was carried out as in Example 1 using the following parameters:
Standard aggregate mix open grade
Mixing temperature : 155°C
Mixing :
Step 1 : stones + sand + 5 % straight run bitumen 95 penetration : 1 min

Step 2 : + filler : 1 min

|  | Tensile stress N/cm² | | | | | |
|---|---|---|---|---|---|---|
| °C test temperature | 0 | 15 | 30 | 45 | 60 | 70 |
| Mixtures PMHS (Trial 1) | 159 | 51.3 | 17.5 | 6.95 | 4.77 | 3.84 |
| Mixtures with straight run bitumen 95 pen. (Trial 2) | 248 | 104.5 | 24.1 | 7.13 | 3.59 | 2.27 |

This Example first clearly shows the importance of adding polymers to bitumen. At low temperatures, the tensile stress is much lower for PmB mixes than for straight run bitumen of the same penetration at 25°C. This means that the mixture with straight run bitumen are much more susceptible to fatigue and low temperature cracking than the polymer-bitumen asphalt mixes.

On the other hand, at increased temperatures, the mixes with PmB show a higher tensile stress indicating the greater resistance against rutting.

## EXAMPLE 7

### Trial 1

Mixing was carried out as in Example 1 using the following parameters:
Standard aggregate mix open grade
Mixing temperature : 175°C
Mixing :
Step 1 : stones + sand + premix PMHS : 1 min
Step 2 : + bitumen 45 penetration : 1 min
Step 3 : + filler : 1 min
   1A : premix PMHS : 3.0 %
   bitumen 45 pen : 1.0 %
   Total : 4.0 %
   Penetration = 98
   1B : premix PMHS : 3.375 %
   bitumen 45 pen : 1.125 %
   Total : 4.5 %
   Penetration = 98
   1C : premix PMHS : 3.75 %
   bitumen 45 pen : 1.25 %
   Total : 5.0 %
   Penetration = 98
   1D : premix PMHS : 4.125 %
   bitumen 45 pen : 1.375 %
   Total : 5.5 %
   Penetration = 98

### Trial 2

Mixing was carried out as in Example 1 using the following parameters:
Standard aggregate mix open grade
Mixing temperature : 160°C
Mixing :
Step 1 : stones + sand + bitumen 95 penetration : 1 min
Step 2 : + filler : 1 min

   2A : 4.0 % straight run bitumen 95 penetration

2B : 4.5 % straight run bitumen 95 penetration
2C : 5.0 % straight run bitumen 95 penetration
2D : 5.5 % striaght run bitumen 95 penetration (mixture 2D is "very fat", some unknown quantity of bitumen drained off the aggregates)

| | Tensile stress in N/cm² at 15°C | | | |
|---|---|---|---|---|
| Total binder in mix | 4.0 | 4.5 | 5.0 | 5.5 |
| Mixtures PMHS (Trial 1) | 51.1 | 44.1 | 42.3 | 42.9 |
| Mixtures with straight run bitumen (Trial 2) | 113 | 107 | 101 | 99 |

This Example shows that the high tensile stress in the straight run bitumen compared to the much lower tensile stress of the PmB-asphalt mixes (at 15°C ) is not due to the amount of binder in the asphalt mix composition, but to the very nature of the binder.

## EXAMPLE 8

Trial 1

A base PMF-mix composed of
80 % (w/w) OF 60
20 % (w/w) Finaprene 411 (Fina)
was mixed with straight run bitumen 45 penetration during 30 min at 175°C.

| | PMF-mix | Bitumen 45 pen | * | Softening point RB of the mixture (in glycerol) | Penetration of the mixture in 0.1 mm |
|---|---|---|---|---|---|
| | % (w/w) | % (w/w) | | °C | |
| 1A | 15 | 85 | 3 | 60.2 | 87 |
| 1B | 20 | 80 | 4 | 63.4 | 94 |
| 1C | 25 | 75 | 5 | 68.9 | 84 |
| 1D | 30 | 70 | 6 | 82.7 | 92 |

* corresponding calculated polymer amount in % by weight in final mix

This Example illustrates the influence of a variation in the amount of preblend PMF resulting in different corresponding polymer amounts in the final polymer-bitumen mixtures, and the corresponding softening points and end penetrations.

The increasing amounts of PMF mix also mean a steady increase in heavy oil.

On the other hand, the remaining amount of bitumen 45 penetration is decreasing all the time. The result of both of these effects is a steady softer mix in case the very heavy oil should have been mixed with the bitumen, without any beneficial effect of the polymers.

Step 2 : + filler : 1 min

| | Tensile stress N/cm² | | | | | |
|---|---|---|---|---|---|---|
| °C test temperature | 0 | 15 | 30 | 45 | 60 | 70 |
| Mixtures PMHS (Trial 1) | 159 | 51.3 | 17.5 | 6.95 | 4.77 | 3.84 |
| Mixtures with straight run bitumen 95 pen. (Trial 2) | 248 | 104.5 | 24.1 | 7.13 | 3.59 | 2.27 |

This Example first clearly shows the importance of adding polymers to bitumen. At low temperatures, the tensile stress is much lower for PmB mixes than for straight run bitumen of the same penetration at 25°C. This means that the mixture with straight run bitumen are much more susceptible to fatigue and low temperature cracking than the polymer-bitumen asphalt mixes.

On the other hand, at increased temperatures, the mixes with PmB show a higher tensile stress indicating the greater resistance against rutting.

## EXAMPLE 7

### Trial 1

Mixing was carried out as in Example 1 using the following parameters:
Standard aggregate mix open grade
Mixing temperature : 175°C
Mixing :
Step 1 : stones + sand + premix PMHS : 1 min
Step 2 : + bitumen 45 penetration : 1 min
Step 3 : + filler : 1 min
  1A : premix PMHS : 3.0 %
  bitumen 45 pen : 1.0 %
  Total : 4.0 %
  Penetration = 98
  1B : premix PMHS : 3.375 %
  bitumen 45 pen : 1.125 %
  Total : 4.5 %
  Penetration = 98
  1C : premix PMHS : 3.75 %
  bitumen 45 pen : 1.25 %
  Total : 5.0 %
  Penetration = 98
  1D : premix PMHS : 4.125 %
  bitumen 45 pen : 1.375 %
  Total : 5.5 %
  Penetration = 98

### Trial 2

Mixing was carried out as in Example 1 using the following parameters:
Standard aggregate mix open grade
Mixing temperature : 160°C
Mixing :
Step 1 : stones + sand + bitumen 95 penetration : 1 min
Step 2 : + filler : 1 min

  2A : 4.0 % straight run bitumen 95 penetration

Example 9

Trial 1

Mixing was carried out as in Example 1 using the following parameters:
Standard aggregate mix for asphalt concrete
Mixing temperature : 175° C
Mixing :
Step 1 : stones + sand + 1.5 % PMHS : 1 min
polymer PMHS = 75 % (w/w) oil H 450 + 25 % (w/w) SBS TR 1101] (Shell)
Step 2 : + 4.5 % bitumen 45 penetration : 1/2 min
Step 3 : + filler : 1 min.

Trial 2 (Comparison)

Mixing was carried out as in Example 1 using the following parameters:
Standard aggregate mix for asphalt concrete
Mixing temperature: 160° C
Mixing :
Step 1 : stones + sand + 6 % straight run bitumen 45 penetration : 1 min
Step 2 : + filler : 1 min

|  | Tensile stress N/cm² | | | | | |
|---|---|---|---|---|---|---|
| ° C test temp. | 0 | 15 | 30 | 45 | 60 | 70 |
| Mixtures PMHS (trial 1) | 206 | 84.1 | 36.4 | 18.1 | 11.0 | 8.36 |
| Mixtures with straight run bitumen 45 pen (trial 2) | 421 | 206 | 51.4 | 19.0 | 12.5 | 7.89 |

This example clearly shows the same observations as made with the open grade asphalt - see Example 6. At low temperature the mixes with polymer-bitumen in the premix-process show a much lower tensile stress. This means a lower susceptibility to fatigue. At higher temperature, the mixes in the premix process with polymers show a higher stress resistance which indicates a higher resistance to rutting.

Example 10

Trial 1

Mixing was carried out as in Example 1 using the following parameters:
Standard aggregate mix for asphalt concrete
Mixing temperature : 175° C
Mixing :
Step 1 : stones + sand + 1.5 % PMOFE : 1 min
[polymer mix PMOFE = 60 % (w/w) oil OF 60 = 32 % (w/w) EVA polybilt 100 + 103 equal parts] (Exxon)
Step 2 : + 4.5 % bitumen 45 penetration : 1 2 min
Step 3 : + filler : 1 min
Tensile stress at 15° C : 117 N/cm²
Deformation : 2.0 %

Note:

The end penetration of the mix :

| Mix | Total parts preblend | PMF mix | | 45 pen bit. | Oil + bitumen mix | | |
|---|---|---|---|---|---|---|---|
| | | oil | pol. | | oil/bit | | Penetration in 0.1 mm |
| | WT | WT | WT | parts WT | in % (w/w) | | |
| 1A | 15 = | 12 + | 3 | 85 | 12.4 | 87.6 | 109 |
| 1B | 20 = | 16 + | 4 | 80 | 16.7 | 83.3 | 137 |
| 1C | 25 = | 20 + | 5 | 75 | 21.1 | 78.9 | 173 |
| 1D | 30 = | 24 + | 6 | 70 | 25.5 | 74.5 | 227 |

Trial 2

A base PMHF mix composed of
75 % (w/w) H 450 oil
25 % (w/w) Finaprene F 411 (Fina)
was mixed with straight run bitumen 45 penetration during 1 hour at 190°C.

| PMHF mix parts preblend | 45 pen | corresponding % (w/w) polymer in final mix | Softening point R + B mixture in glycerol | penetration mixture 0.1 mm |
|---|---|---|---|---|
| WT | Parts WT | | | |
| 2A : 16 | 84 | 4 | 77.2 | 148 |
| 2B : 24 | 76 | 6 | 86.3 | 141 |
| 2C : 32 | 68 | 8 | 96.7 | 144 |

This trial gives the same conclusion as described in trial 1.

Examples part B

Preparation of asphalt concrete

Asphalt concrete is used in wearing courses and has approximately the following composition.(% by weight):
stones : 55 %
sand : 38 %
filler 7 %
binder 5.8 - 6.0 %
To lower the standard deviations on the mechanical properties, we reduced the maximum stone size to 7 mm in the tests.
The standard composition used in our experiments is:
crushed gravel stone : 55 % (sg : 2.637)
natural river sand : 18 % (sg : 2.650)
crushed gravel sand : 20 % (sg : 2.681)
filler type II : 7 % (sg : 2.489)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 10, no. 112 (C-342)[2169], 25th April 1986; & JP-A-60 243 149 (MATSUNAGA KENSETSU K.K.) 03-12-1985 | 1,3,4 | C 08 L  95/00  // (C 08 L  95/00   C 08 L 101:00   C 08 L  91:00 ) |
| | --- | | |
| A | NL-A-7 216 310  (SHELL) * Claims 1,5,7,16 * | 1,6 | |
| | --- | | |
| A | US-A-4 443 570  (HOMER L. DRAPER) * Claims 1,8 * | 1,6 | |
| | --- | | |
| A,D | EP-A-0 096 638  (ELF FRANCE) * Abstract * | | |
| | ----- | | |

TECHNICAL FIELDS
SEARCHED (Int. Cl.5)

C 08 L  95/00

The present search report has been drawn up for all claims

| Place of search | Date of completion of the search | Examiner |
|---|---|---|
| THE HAGUE | 13-06-1990 | GIRARD Y.A. |